# EUROPÄISCHE PATENTSCHRIFT

(11) **EP 2 598 281 B1**
(45) Veröffentlichungstag und Bekanntmachung des Hinweises auf die Patenterteilung: **08.04.2015**
(21) Anmeldenummer: 12758800.2
(22) Anmeldetag: 23.08.2012
(51) Int. Cl.: B23Q 11/10, B23B 29/04

(54) **WERKZEUGHALTER MIT EINEM KÜHLSCHMIERMITTELZUFÜHRUNGSSYSTEM**
TOOL HOLDER WITH A COOLING LUBRICANT SUPPLY SYSTEM
PORTE-OUTIL AVEC UN SYSTÈME D'ALIMENTATION EN RÉFRIGÉRANT-LUBRIFIANT

(30) Priorität: 24.08.2011 DE 102011081502
(43) Veröffentlichungstag der Anmeldung: 05.06.2013
(73) Patentinhaber: Gühring OHG, 72458 Albstadt (DE)
(72) Erfinder: HOTZ, Alfred, 72510 Stetten a. k. M. (DE); AYGÜN, Hakki, 72505 Krauchenwies/Göggingen (DE)
(74) Vertreter: Winter, Brandl, Fürniss, Hübner, Röss, Kaiser, Polte - Partnerschaft mbB
(86) Internationale Anmeldenummer: PCT/EP2012/066443
(87) Internationale Veröffentlichungsnummer: WO 2013/026905

(56) Entgegenhaltungen:
- EP-A2- 0 925 869
- EP-A2- 1 166 959
- DE-A1-102010 026 557
- ANONYMOUS: "Tool holder adjustment screw with integral filter and seal", RESEARCH DISCLOSURE, MASON PUBLICATIONS, HAMPSHIRE, GB, Bd. 386, Nr. 35, 1. Juni 1996 (1996-06-01) , XP007121124, ISSN: 0374-4353

## Beschreibung

Die Erfindung betrifft einen Werkzeughalter mit einem Kühlschmiermittelzuführungssystem gemäß dem Oberbegriff des Anspruchs 1.

Ein derartiger Werkzeughalter mit einem Kühlschmiermittelzuführungssystem ist beispielsweise aus der DE 10312743 A1, DE 102010026557 A1 oder EP 0925869 A2 bekannt.

Die DE 10312743 A1 zeigt und beschreibt ein Spannfutter mit einem Kühlschmiermittelzuführungssystem, das im Wesentlichen aus einer Hülse, in die von einer spindelseitigen Einspeisestelle ein Kühlschmiermittel eingespeist wird und einer in Strömungsrichtung der Hülse nachgeordneten Stellschraube gebildet ist. Die Stellschraube taucht mit einem Rohrelement, das mit der Stellschraube einstückig ausgebildet ist, in einen zentrischen Kühlschmiermittelkanal der Hülse axial verschieblich ein.

Die DE 102010026557 A1 zeigt und beschreibt verschiedene Ausführungsformen eines Spannfutters mit jeweils einem Kühlschmiermittelzuführungssystem. Das Kühlschmiermittelzuführungssystem ist wie in der DE 10312743 A1 aus einer Hülse, einer der Hülse in Strömungsrichtung des Kühlschmiermittels nachgeordneten Stellschraube und einem Rohrelement gebildet. Im Unterschied zur DE 10312743 A1 ist in der DE 102010026557 A1 das Rohrelement von der Stellschraube getrennt ausgebildet, aber mit dem Rohrelement drehfest und axial verschieblich verbunden. Das Rohrelement kann dabei wie in der DE 10312743 A1 in die Hülse eintauchen oder mit einem geringen axialen Abstand zur Hülse angeordnet sein.

Schließlich zeigt und beschreibt die EP 0925869 A2 einen Werkzeughalter mit einem Kühlschmiermittelzuführungssystem, das ein Kühlmittelrohr Hülse aufweist, in das von einer spindelseitigen Einspeisestelle ein Kühlschmiermittel eingespeist wird. Der dem Kühlmittelrohr in Strömungsrichtung des Kühlschmiermittels nachgeordnete Bereich ist nicht näher beschrieben. Im Unterschied zu dem aus der DE 10312743 A1 oder DE 102010026557 A1 bekannten Kühlschmiermittelzuführungssystem ist aber im Bereich einer Einlassöffnung eines durch das Kühlmittelrohr hindurch definierten Kühlmittelkanals eine Abdeckung angeordnet. Die Abdeckung umfasst ein Sieb, das verhindern soll, dass Späne über die Einlassöffnung in den Kühlmittelkanal und schließlich in die feinen Kühlmittelkanäle eines im Werkzeughalter eingespannten Werkzeugs gelangen können.

Um das Sieb im Kühlmittelkanal zu haltenden, ist allerdings ein Klemmelement, beispielsweise ein Zackenring, erforderlich, der das Sieb im Bereich der Einlassöffnung des Kühlmittelkanals hält. Das Klemmelement ist in einer gegenüber dem einlassöffnungsseitigen Ende der Hülse etwas zurückgesetzten Ringnut angeordnet, die zur Einlassöffnung hin eine Ringschulter definiert, die verhindert, dass das Klemmelement über die Einlassöffnung aus dem Kühlmittelkanal fällt. Die Ausbildung der Ringnut bedeutet einen zusätzlichen Fertigungsaufwand.

Hinzu kommt, dass das im Bereich der Einlassöffnung des Kühlmittelkanals des Kühlmittelrohrs angeordnete Sieb und/oder das Klemmelement von außen leicht zugänglich sind. Bei einer unsachgemäßen Handhabung, beispielsweise beim Ankuppeln des Werkzeughalters an eine Spindelaufnahme einer Werkzeugmaschine, durch in das Kühlmittelrohr eindringende Gegenstände, z. B. längere Späne, ein Zangensegment eines spindelseitig vorhandenen Spannsystems, etc., kann daher das Sieb und/oder das Klemmelement beschädigt werden. Des Weiteren können die bei einer Kühlschmiermittelzufuhr von der Abdeckung zurückgehaltenen Späne leicht in das Innere des Werkzeughalters, z. B. einen Hohlschaftkegel, gelangen, was die Einspannung und/oder Ankupplung des Spannfutters an die Spindelaufnahme behindern kann.

Ausgehend von der EP 0925869 A2 hat die Erfindung die Aufgabe, ein mit einem Filter ausgestattetes Kühlschmiermittelzuführungssystem zu schaffen, das kompakt aufgebaut, einfach herzustellen und weniger beschädigungsempfindlich ist und eine einfachere Handhabung ermöglicht.

Diese Aufgabe wird durch einen Werkzeughalter mit einem Kühlschmiermittelzuführungssystem mit den Merkmalen des Anspruchs 1 gelöst.

Ein erfindungsgemäßes Kühlschmiermittelzuführungssystem hat die Funktion, ein von einer spindelseitigen Einspeisestelle einer Werkzeugmaschine kommendes Kühlschmiermittel in Richtung zu einem in einem Werkzeughalter gehaltenen Werkzeug zu führen. Das Kühlschmierungszuführungssystem umfasst die zwischen der spindelseitigen Einspeisestelle und dem im Werkzeughalter gehaltenen Werkzeug befindlichen Komponenten, Funktionsabschnitte, etc., die an der Übernahme des Kühlschmiermittels von der maschinenseitigen Einspeisestelle und Führung des Kühlschmiermittels in den oder die Kühlschmiermittelkanäle im Werkzeug beteiligt sind. Das Kühlschmiermittelzuführungssystem kann zu diesem Zweck eine im Werkzeughalter anzuordnende Hülse, in die von einer spindelseitigen Einspeisestelle an einer Werkzeugmaschine ein Kühlschmiermittel eingespeist wird, und/oder - soweit vorhanden - eine der Hülse nachgeordnete, in den Werkzeughalter eingeschraubte Stellschraube, eine zwischen der Hülse und der Stellschraube vorgesehenen Verbindungsbohrung im Grundkörper des Werkzeughalters, ein zwischen der Stellschraube und der Hülse angeordnetes Rohrelement, etc. aufweisen. In jedem Fall definiert das erfindungsgemäße Kühlschmiermittelzuführungssystem einen zentrischen Kühlschmiermittelkanal.

Um nun zu verhindern, dass Verunreinigungen, die in dem in den zentrischen Kühlschmiermittelkanal eingespeisten Kühlschmiermittel enthalten sind, in den oder die Kühlschmiermittelkanäle des im Werkzeughalter eingespannten Werkzeugs oder in das Innere des Werkzeughalters gelangen, weist das erfindungsgemäße Kühlschmiermittelzuführungssystem ein in dem zentrischen Kühlschmiermittelkanal angeordnetes Filter auf, das in Strömungsrichtung des Kühlschmiermittels in einem definierten Abstand hinter der Einlassöffnung des zentrischen Kühlschmiermittelkanals platziert ist. Der definierte Abstand zur Einlassöffnung ist so groß, dass in dem zentrischen Kühlschmiermittelkanal ein Stauraum zur Aufnahme von durch das Filter zurückgehaltenen Verunreinigungen geschaffen wird. Das Filter kann also in einem Mittelabschnitt oder Endabschnitt der bereits erwähnten Hülse angeordnet sein, die das von der spindelseitigen Einspeisestelle her kommende Kühlschmiermittel übernimmt. Es kann aber auch in einem der Hülse in Strömungsrichtung nachgeordneten Abschnitt des zentrischen Kühlschmiermittelkanals, also z. B. in einer Stellschraube, in einem zwischen der Hülse und der Stellschraube vorgesehenen Verbindungsbohrung im Grundkörper des Werkzeughalters, und/oder in einem zwischen der Stellschraube und der Hülse angeordneten Rohrelement, angeordnet sein.

Die Anordnung des Filters in Strömungsrichtung des Kühlschmiermittels in einem definierten Abstand hinter der Einlassöffnung des zentrischen Kühlschmiermittelkanals hat gegenüber der Lösung aus der eingangs diskutierten EP 0925869 A2 zahlreiche Vorteile.

Zum Einen ist das Filter in dem zentrischen Kühlschmiermittelkanal in Strömungsrichtung des Kühlschmiermittels von dessen spindelseitiger Einlassöffnung ausgehend relativ tief angeordnet und damit weniger leicht von außerhalb des Werkzeughalters zugänglich und damit besser vor Beschädigungen geschützt.

Zum Anderen wird durch die in Strömungsrichtung des Kühlschmiermittels in einem definierten Abstand hinter der Einlassöffnung angeordnete Filter zwischen der Einlassöffnung und dem Filter der bereits erwähnte Stauraum geschaffen, um herausgefilterte Verunreinigungen, z. B. Späne, aufzunehmen. Die Tiefe des Stauraums entspricht dem definierten Abstand des Filters zur Einlassöffnung. Der Stauraum bietet daher die Möglichkeit, eine größere Menge an Verunreinigungen aufzunehmen bzw. Verunreinigungen in einer größeren Tiefe zurückzuhalten. Daher besteht beispielsweise beim Einspannen des mit dem Kühlschmiermittelzuführungssystem ausgestatteten Werkzeughalters in einer Werkzeugaufnahme an einer Werkzeugmaschinenspindel weniger die Gefahr, dass Verunreinigungen in das Innere des Werkzeughalters fallen. Ein mit dem erfindungsgemäßen Kühlschmiermittelzuführungssystem ausgestatteter Werkzeughalter ermöglicht daher eine einfachere oder sorglosere Handhabung.

Erfindungsgemäß ist das Filter in einer zentrischen Durchgangsbohrung eine auch als Übernahmeeinheit bekannten Hülse angeordnet, in die von einer spindelseitigen Einspeisestelle ein Kühlschmiermittel eingespeist wird. In diesem Fall kann das Filter im Mittelbereich oder im Bereich der Auslassöffnung der zentrischen Durchgangsbohrung angeordnet sein. Im Unterschied zu dem aus der EP 0925869 A2 bekannten Kühlschmiermittelzuführungssystem, das zulässt, dass eine der Hülse nachgeordnete Stellschraube nach dem Vorbild des in der DE 10312743 A1 angegebenen Kühlschmiermittelzuführungssystems in die Hülse eintaucht, verhindert die Anordnung des Filters im Mittelbereich oder im Bereich der Auslassöffnung der zentrischen Durchgangsbohrung der Hülse, dass eine nachgeordnete Stellschraube weniger tief bzw. nicht mehr in die zentrische Durchgangsbohrung eintauchen kann. Wenn das Filter im Bereich der Auslassöffnung angeordnet ist, kann andererseits auf ein zusätzliches Klemmmittel verzichtet werden, das das Filter in der Hülse hält. Denn es bietet sich die Möglichkeit, eine im Grundkörper des Werkzeughalters definierte Stützfläche, gegen die die Hülse axial anschlägt, heranzuziehen, um das Filter gegen ein Herausfallen aus der Hülse zu bewahren.

In einer anderen Ausführungsform ist das Filter in einer zentrischen Durchgangsbohrung einer der Hülse nachgeondneten Stellschaube angeordnet. Da das Filter in diesem Fall einen relativ großen Abstand zur Einlassöffnung des zentrischen Kühlschmiermittelkanals einhält, kann das Filter in der zentrischen Durchgangsbohrung der Stellschraube prinzipiell an jeder geeigneten Stelle angeordnet sein. Zweckmäßig ist es im Bereich der Einlass- oder Auslassöffnung der zentrischen Durchgangsbohrung der Stellschraube angeordnet.

Dasselbe gilt für den Fall, in dem das Filter in einer zentrischen Durchgangsbohrung eines die Stellschraube mit der Hülse verbindenden Rohrelements oder in einer im Grundkörper des Werkzeughalters ausgebildeten, zentrischen Verbindungsbohrung angeordnet ist.

Um ein Kippen des Filters in dem zentrischen Kühlschmiermittelkanal zu verhindern, hat das Filter eine in Strömungsrichtung des Kühlschmiermittels gemessene ausreichend große Außenumfangsfläche, die das Filter in der Art eines Kolbens führt. Im Unterschied zu dem aus dem eingangs diskutierten Stand der Technik wird durch die Führung des Filters über dessen Außenumfangsfläche sichergestellt, dass das Filter in dem zentrischen Kühlschmiermittelkanals stets zumindest im Wesentlichen konzentrisch angeordnet ist. Es bedarf daher keiner weiteren technischen Maßnahme, z. B. eines Klemmelements oder Stützrings, um die für eine zuverlässige Funktion erforderliche konzentrische Lage des Filters in dem zentrischen Kühlschmiermittelkanal zu halten.

Das Filter ist ferner vorteilhaft mit einer definierten Presspassung in der zentrischen Durchgangsbohrung des Übergaberohrs angeordnet. Durch diese Maßnahme hält das Filter ohne weitere technische Maßnahmen, z. B. Klemmelemente, etc., allein durch die definierte Presspassung in der zentrischen Durchgangsbohrung des Übergaberohrs.

Der Abschnitt des zentrischen Kühlschmiermittelszuführungskanals, in dem das Filter angeordnet ist, kann als eine Stufenbohrung mit einer durch zwei, axial aneinander grenzenden Bohrungsabschnitten mit unterschiedlichen Bohrungsdurchmessern ausgebildet sein, wobei der Bohrungsabschnitt mit dem größeren Bohrungsdurchmesser in Strömungsrichtung des Kühlschmiermittels von der Einlassöffnung des zentrischen Kühlschmiermittelkanals weiter entfernt ist als der Bohrungsabschnitt mit dem kleineren Bohrungsdurchmesser. Das Filter ist dabei vorzugsweise in dem Bohrungsabschnitt mit dem größeren Bohrungsdurchmesser angeordnet. Die Stufe bildet dann eine Stützfläche zur axialen Abstützung des Filters in Richtung zur Einlassöffnung hin.

In einer bevorzugten Weiterbildung ist das Filter mit einem definierten axialen Untermaß in dem Bohrungsabschnitt mit dem größeren Bohrungsdurchmesser angeordnet. Durch diese Weiterbildung wird verhindert, dass das Filter bei der Montage keine Quet-schung in axialer Richtung erleidet. Es wird dadurch erreicht, dass die Funktionsfähig-keit des Filters erhalten bleibt.

Das Filter kann in der Art eines Siebs aus einem Drahtgeflecht ausgebildet sein. Alternativ dazu kann das Filter aus einem Drahtgitter, Lochblech oder dergleichen gebildet sein. Die Größe der Filter- oder Sieböffnungen bzw. die Maschenweite ist so gewählt, dass die üblicherweise zu erwartenden Verunreinigungen, im Besonderen Späne, aus dem Kühlschmiermittel herausgefiltert werden können. Das Filter kann einteilig oder einstückig aus dem Drahgeflecht, Drahtgitter, Lochblech oder dergleichen gebildet sein. Alternativ dazu kann das Filter neben einem aus dem Drahgeflecht, Drahtgitter, Loch-blech oder dergleichen gebildeten Filterboden eine umfangsseitige, rahmenartige Ein-fassung aufweisen, über die das Filter in dem zentrischen Kühlschmiermittelkanal des Kühlschmiermittelübergangssatzes geführt und gehalten wird.

Das Filter kann aus mehreren, z. B. drei, Filterelementen zusammengesetzt sein, die in Strömungsrichtung des Kühlschmiermittels hintereinander angeordnet sind. Die Filterelemente können jeweils aus einem Drahtgeflecht, Drahtgitter, Lochblech oder dergleichen gebildet sein. Die Filterelemente können beispielsweise von einer rahmenartigen Einfassung zusammengehalten sein. Die Filterelemente können aber auch in anderer Weise zu einem einstückig handhabaren Filter verbunden sein. Bei dieser Weiterbildung haben die Filterelemente zweckmäßig verschiedene Maschenweiten, wobei die Maschenweite in Strömungsrichtung des Kühlschmiermittels abnimmt. Dadurch können im Kühlschmierstoff enthaltene Verunreinigungen über verschiedene Filterstufen herausgefiltert werden.

Im Folgenden werden mit Hilfe der Zeichnungen bevorzugte Ausführungsformen des erfindungsgemäßen Werkzeughalters mit einem Kühlschmiermittelzuführungssystems beschrieben.
Fig. 1 a zeigt eine erste Ausführungsform eines erfindungsgemäßen Kühlschmiermittelzuführungssystems in einem Längsschnitt entlang der Längsmittelachse des Werkzeughalters.
Fig. 1b zeigt in einem vergrößerten Maßstab ein Detail der ersten Ausführungsform.
Fig. 2 bis 4 zeigen eine mit einem Filter ausgestattete Hülse der ersten Ausführungsform in verschiedenen Darstellungen.
Fig. 5 zeigt die Hülse in einem Längsschnitt entlang der Längsmittelachse des Werkzeughalters.
Fig. 6a zeigt eine zweite Ausführungsform eines erfindungsgemäßen Kühlschmiermittelzuführungssystems in einem Längsschnitt entlang der Längsmittelachse des Werkzeughalters.
Fig. 6b zeigt in einem vergrößerten Maßstab ein Detail der ersten Ausführungsform.
Fig. 7 zeigt eine dritte Ausführungsform eines erfindungsgemäßen Kühlschmiermittelzuführungssystems in einem Längsschnitt entlang der Längsmittelachse des Werkzeughalters.

### Erste Ausführungsform

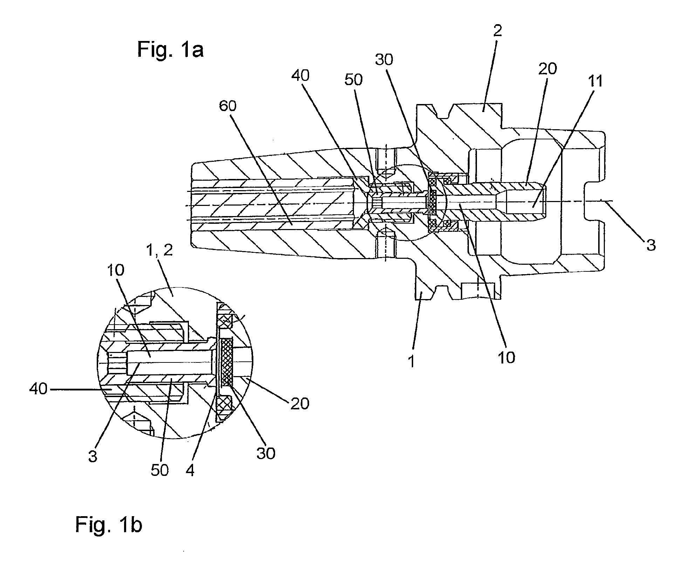

In der in den Fig. 1 bis 5 gezeigten ersten Ausführungsform definiert das Kühlschmiermittelzuführungssystem einen zentrischen Kühlschmiermittelkanal 10, der sich entlang einer Längsmittelachse 3 von einer (nicht gezeigten) spindelseitigen Einspeisestelle durch einen Werkzeughalter 1 hindurch bis zu einem im Werkzeughalter 60 eingespannten Werkzeug 60 erstreckt. Der Kühlschmiermittelkanal 10 verläuft ausgehend von der spindelseitigen Einspeisestelle im Besonderen durch eine Hülse 20, die das von der spindelseitigen Einspeisestelle kommende Kühlschmiermittel übernimmt und in Richtung Werkzeug 60 weiterführt, ein in der Hülse 20 angeordnetes Filter 30, eine im Grundkörper 2 des Werkzeughalters 1 ausgebildete, hier relativ kurze Verbindungsbohrung 4, ein Rohrelement 50 und eine Stellschraube 40.

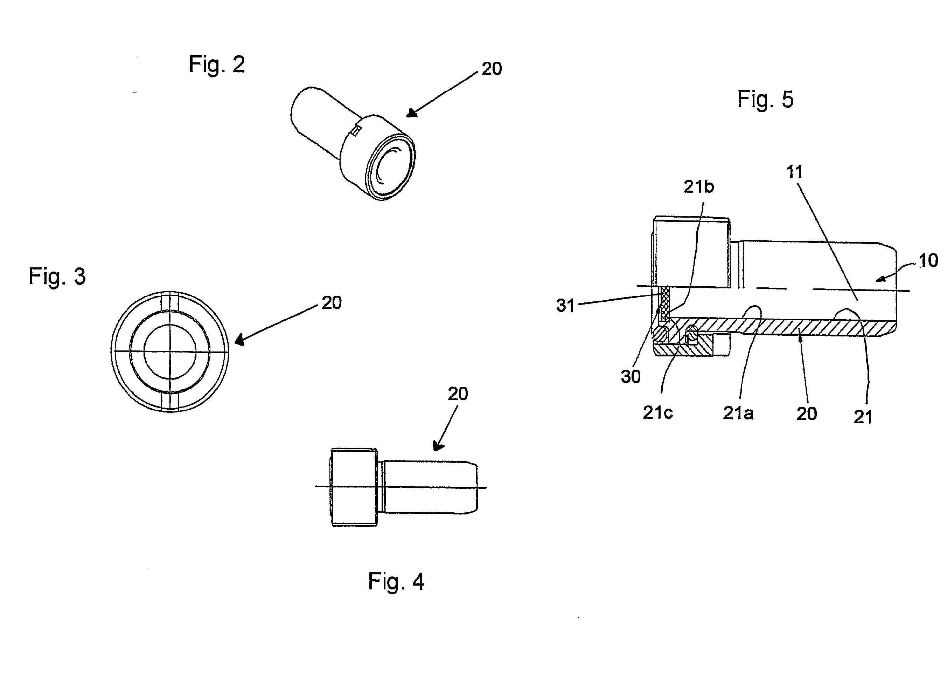

In der ersten Ausführungsform ist das Filter 30, wie es in Fig. 1a, 1b und 5 gezeigt ist, in der Hülse 20 angeordnet. Durch die Hülse 20 läuft entlang der Längsmittelachse 3 eine zentrische Durchgangsbohrung 21. Das in Fig. 5 rechte Ende der Durchgangsbohrung 21 bildet eine Einlassöffnung, in das das von der spindelseitigen Einspeisestelle kommende Kühlschmiermittel eingespeist wird. Das in Fig. 4 linke Ende der Durchgangsbohrung 21 bildet eine Auslassöffnung, aus der das durch die Durchgangsbohrung 21 geströmte Kühlschmiermittel zunächst über die Verbindungsbohrung 4 im Grundkörper 2 des Werkzeughalters 1 in das Rohrelement 50 und die Stellschraube 40 weiterströmt. Das Filter 30 ist dem zur Auslassöffnung hin orientierten Endbereich der zentrischen Durchgangsbohrung 21 der Hülse 20 angeordnet.

Die zentrische Durchgangsbohrung 21 der Hülse 20 ist als eine Stufenbohrung mit zwei Bohrungsabschnitten 21a, 21b mit unterschiedlichen Bohrungsdurchmessern ausgebildet ist. Das Filter 30 ist dabei in dem Bohrungsabschnitt 21 b mit dem größeren Bohrungsdurchmesser angeordnet. Zwischen den beiden Bohrungsabschnitten 21a, 21b ist eine radiale Stufe 21c ausgebildet, die eine Stützfläche zur axialen Abstützung des Filters 30 in Richtung zur Einlassöffnung hin bildet. Die beiden Bohrungsabschnitte 21 a, 21 b haben über ihre gesamte Länge jeweils einen gleichbleibenden Bohrungsdurchmesser.

Durch die Anordnung des Filters 30 im Bereich der Auslassöffnung der zentrischen Durchgangsbohrung 21 der Hülse 20 wird in Strömungsrichtung des Kühlschmiermittels vor der Hülse 20 in dem zentrischen Kühlschmiermittelkanal 10 ein Stauraum 11 zur Aufnahme von am Filter 30 zurückgehaltenen Verunreinigungen geschaffen.

Der weitere Aufbau der Hülse 20 sowie deren Funktion und Befestigung über eine Gewindehülse 22 im Grundkörper 2 des Werkzeughalters ist dem Fachmann bekannt.

Das Filter 30 kann in der Art eines Siebs aus einem Drahtgeflecht ausgebildet sein. Alternativ dazu kann das Filter aus einem Drahtgitter, Lochblech oder dergleichen gebildet sein. Die Größe der Filter- oder Sieböffnungen bzw. die Maschenweite ist so gewählt, dass die üblicherweise zu erwartenden Verunreinigungen, im Besonderen Späne, aus dem Kühlschmiermittel herausgefiltert werden können. Das Filter 30 kann einteilig oder einstückig aus dem Drahgeflecht, Drahtgitter, Lochblech oder dergleichen gebildet sein. Alternativ dazu kann das Filter neben einem aus dem Drahgeflecht, Drahtgitter, Lochblech oder dergleichen gebildeten Filterboden eine (nicht gezeigte) umfangsseitige, rahmenartige Einfassung aufweisen, über die das Filter 30 in der zentrischen Durchgangsbohrung 21 in der Hülse 20 geführt und gehalten wird.

Das Filter 30 ist, wie es aus Fig. 5 ersichtlich ist, mit einem axialen Untermaß in dem Bohrungsabschnitt 21b angeordnet. Dadurch wird verhindert, dass das Filter 30 bei der Befestigung der Hülse 20 im Grundkörper 2 des Werkzeughalters 1 axial gequetscht wird.

Das Filter 30 kann mit einer definierten radialen Presspassung in der zentrischen Durchgangsbohrung 21 der Hülse 20 angeordnet sein. Das Filter 30 hält damit allein durch die radial Klemmung in der zentrischen Durchgangsbohrung 21 der Hülse 20.

Wie es aus Fig. 5 ersichtlich ist, hat das Filter 30 eine Außenumfangsfläche 31, die das Filter 30 quasi in der Art eines Kolbens in der zentrischen Durchgangsbohrung 21 der Hülse 20 führt.

### Zweite Ausführungsform

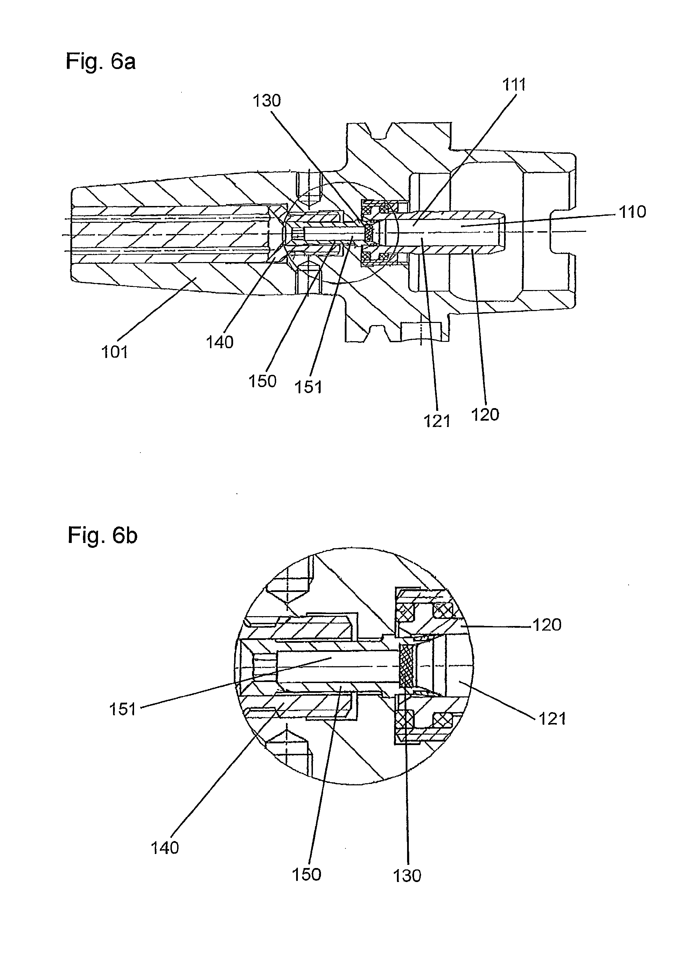

Die in Fig. 6a und 6b gezeigte zweite Ausführungsform unterscheidet sich von der ersten Ausführungsform im Wesentlichen nur dadurch, dass das Filter 130 in einer zentrischen Durchgangsbohrung151 eines der Hülse 120 nachgeordneten Rohrlements 150 angeordnet ist, und dass das Rohrelement 150 axial verschieblich in die Hülse 120 eintaucht.

Das Rohrelement 150 stellt eine Strömungsverbindung zwischen der Hülse 120 und der Stellschraube 140 her. Das Filter 130 ist hier im Besonderen im Bereich der Einlassöffnung der zentrischen Durchgangsbohrung 151 des Rohrelements 150 angeordnet. Die zentrische Durchgangsbohrung 151 des Rohrelements 150 ist analog zur zentrischen Durchgangsbohrung 21 der Hülse 20 der ersten Ausführungsform als eine gestufte Bohrung ausgebildet, wobei das Filter 130 in dem Bohrungsabschnitt mit dem größeren Bohrungsdurchmesser angeordnet ist. Das Filter 130 ist hier allerdings durch eine radiale Stufe in eine Richtung zur Auslassöffnung der zentrischen Durchgangsbohrung 151 des Rohrelements 150 abgestützt.

Durch die Anordnung des Filters 130 in der zentrischen Durchgangsbohrung 151 des Rohrelements 150 wird analog zur ersten Ausführungsform in dem zentrischen Kühlschmiermittelkanal 110 ein Stauraum 111 zur Aufnahme der vom Filter 130 zurückgehaltenen Verunreinigungen geschaffen.

### Dritte Ausführungsform

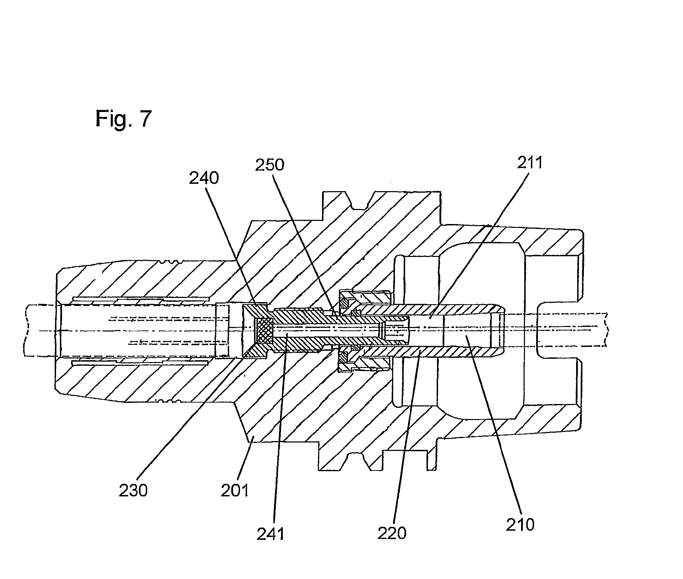

Die in Fig. 7 gezeigte dritte Ausführungsform unterscheidet sich von der ersten Ausführungsform im Wesentlichen nur dadurch, dass das Filter 230 in einer zentrischen Durchgangsbohrung 241 einer der Hülse 220 nachgeordneten Stellschraube 240 angeordnet ist, dass die Stellschraube 240 einstückig mit einem Rohrelement 250 ausgebildet ist, und dass das Rohrelement 250 axial verschieblich in die Hülse 220 eintaucht.

Das Filter 230 ist hier im Besonderen im Bereich der Auslassöffnung der zentrischen Durchgangsbohrung 241 der Stellschraube 240 angeordnet. Die zentrische Durchgangsbohrung 241 der Stellschraube 240 ist analog zur zentrischen Durchgangsbohrung 21 der Hülse 20 der ersten Ausführungsform als eine gestufte Bohrung ausgebildet, wobei das Filter 230 in dem Bohrungsabschnitt mit dem größeren Bohrungsdurchmesser angeordnet ist.

Durch die Anordnung des Filters 230 in der zentrischen Durchgangsbohrung 241 der Stellschraube 240 wird analog zur ersten Ausführungsform in dem zentrischen Kühlschmiermittelkanal 210 ein Stauraum 211 zur Aufnahme der vom Filter 230 zurückgehaltenen Verunreinigungen geschaffen.

### Weitere Ausführungsformen

Abweichend von den oben beschriebenen Ausführungsformen kann das Filter in einer im Grundkörper des Werkzeughalters ausgebildeten Verbindungsbohrung angeordnet sein, die eine Hülse, die das spindelseitig gelieferte Kühlschmiermittel übernimmt, mit einer Stellschraube oder einem Rohrelement verbindet.

Abweichend von den oben beschriebenen Ausführungsformen muss der erfindungsgemäße Werkzeughalter mit einem Kühlschmierungszuführungssystem nicht notwendig sämtliche zwischen der spindelseitigen Einspeisestelle und dem im Werkzeughalter gehaltenen Werkzeug befindlichen Komponenten, Funktionsabschnitte, etc. umfassen, die an der Übernahme des Kühlschmiermittels von der maschinenseitigen Einspeisestelle und Führung des Kühlschmiermittels in den oder die Kühlschmiermittelkanäle im Werkzeug beteiligt sind. Das erfindungsgemäße Kühlschmiermittelzuführungssystem kann aus einer oder mehren dieser Komponenten, Funktionsabschnitte, etc. gebildet sein. Es kann daher eine im Werkzeughalter anzuordnende Hülse, die das von einer spindelseitigen Einspeisestelle an einer Werkzeugmaschine eingespeiste Kühlschmiermittel übernimmt, eine ggf. der Hülse nachgeordnete Stellschraube, eine ggf. zwischen der Hülse und der Stellschraube vorgesehene Verbindungsbohrung im Grundkörper des Werkzeughalters und/oder ein ggf. zwischen der Stellschraube und der Hülse angeordnetes Rohrelement, etc. aufweisen.

## Patentansprüche

1. Werkzeughalter (1; 110; 210) mit einem Kühlschmiermittelzuführungssystem zur Führung eines von einer spindelseitigen Einspeisestelle einer Werkzeugmaschine kommenden Kühlschmiermittels durch einen zentrischen Kühlschmiermittelkanal (10; 110; 210) zu einem im Werkzeughalter (1; 101; 201) eingespannten Werkzeug (60), wobei der zentrische Kühlschmiermittelkanal (10; 110; 210) wenigstens durch eine im Werkzeughalter (1; 101; 201) angeordnete Hülse (20; 120; 220) zur Übernahme des spindelseitig zugeführten Kühlschmiermittels führt und in dem zentrischen Kühlschmiermittelkanal (10; 110; 210) in Strömungsrichtung des Kühlschmiermittels in einem definierten Abstand hinter der Einlassöffnung des zentrischen Kühlschmiermittelkanals (10; 110; 210) ein Filter (30; 130; 230) zum Herausfiltern von im Kühlschmiermittel enthaltenen Verunreinigungen dergestalt angeordnet ist, dass in dem zentrischen Kühlschmiermittelkanal (10; 110; 210) ein Stauraum (11; 111; 211) zur Aufnahme von durch das Filter (30; 130; 230) zurückgehaltenen Verunreinigungen geschaffen ist, **dadurch gekennzeichnet, dass**
das Filter (30; 130; 230) in Strömungsrichtung des Kühlschmiermittels entweder in einem Mittelbereich (21a) oder im Bereich der Auslassöffnung (21b) der Hülse (20) oder in einem der Hülse (120; 220) nachgeordneten Abschnitt des zentrischen Kühlschmiermittelkanals (10; 110; 210) angeordnet ist.

2. Werkzeughalter (1; 110; 210) nach Anspruch 1, **dadurch gekennzeichnet, dass** der zentrische Kühlschmiermittelkanal (10; 110; 210) durch eine der Hülse (20; 120; 220) nachgeordnete, in den Werkzeughalter (1; 101; 201) eingeschraubte Stellschraube (40; 140; 240) sowie einen Bereich zwischen der Hülse (20; 120; 220) und der Stellschraube (40; 140; 240) führt.

3. Werkzeughalter (1; 110; 210) nach Anspruch 2, **dadurch gekennzeichnet, dass** der Bereich zwischen der Hülse (20; 120; 220) und der Stellschraube (40; 140; 240) eine im Grundkörper (2; 102; 202) des Werkzeughalters (1; 101; 201) ausgebildete Verbindungsbohrung (4) und/oder ein zwischen der Stellschraube (40; 140; 240) und der Hülse (20; 120; 220) angeordnetes Rohrelement (50; 150; 250) umfasst.

4. Werkzeughalter (1; 110; 210) nach einem der Ansprüche 1 bis 3, **dadurch gekennzeichnet, dass** das Filter (130; 230) in der Stellschraube (40; 140; 240), in der Verbindungsbohrung (4) oder in dem Rohrelement (50; 150; 250) angeordnet ist.

5. Werkzeughalter (1; 110; 210) nach einem der Ansprüche 1 bis 4, **dadurch gekennzeichnet, dass** das Filter (30) in der Art eines Kolbens ausgebildet ist und über seine Außenumfangsfläche (31) in dem zentrischen Kühlschmiermittelkanal (10) axial geführt aufgenommen ist.

6. Werkzeughalter (1; 110; 210) nach Anspruch 5, **dadurch gekennzeichnet, dass** das Filter (30) in dem zentrischen Kühlschmiermittelkanal (10) mit einer definierten Presspassung angeordnet ist.

7. Werkzeughalter (1; 110; 210) nach einem der Ansprüche 1 bis 6, **dadurch gekennzeichnet, dass** das Filter (30) als ein Sieb ausgebildet ist.

## Claims

1. Tool holder (1; 110; 210) having a cooling lubricant supply system for guiding a cooling lubricant which is from a spindle-side supply location of a machine tool through a central cooling lubricant channel (10; 110; 210) to a tool (60) which is clamped in the tool holder (1; 101; 201), the central cooling lubricant channel (10; 110; 210) extending at least through a sleeve (20; 120; 220) which is arranged in the tool holder (1; 101; 201) for receiving the cooling lubricant which is supplied at the spindle side and there being arranged in the central cooling lubricant channel (10; 110; 210) in the flow direction of the cooling lubricant with a defined spacing behind the inlet opening of the central cooling lubricant channel (10; 110; 210) a filter (30; 130; 230) for filtering out impurities contained in the cooling lubricant in such a manner that a storage space (11; 111; 211) for receiving impurities retained by the filter (30; 130; 230) is provided in the central cooling lubricant channel (10; 110; 210), **characterised in that**
the filter (30; 130; 230) is arranged in the flow direction of the cooling lubricant either in a central region (21a) or in the region of the outlet opening (21b) of the sleeve (20) or in a portion of the central cooling lubricant channel (10; 110; 210), which portion is arranged downstream of the sleeve (120; 220).

2. Tool holder (1; 110; 210) according to claim 1, **characterised in that** the central cooling lubricant channel (10; 110; 210) extends through an adjustment screw (40; 140; 240) which is arranged downstream of the sleeve (20; 120; 220) and which is screwed into the tool holder (1; 101; 201) and a region between the sleeve (20; 120; 220) and the adjustment screw (40; 140; 240).

3. Tool holder (1; 110; 210) according to claim 2, **characterised in that** the region between the sleeve (20; 120; 220) and the adjustment screw (40; 140; 240) comprises a connection hole (4) which is formed in the base member (2; 102; 202) of the tool holder (1; 101; 201) and/or a pipe element (50; 150; 250) which is arranged between the adjustment screw (40; 140; 240) and the sleeve (20; 120; 220).

4. Tool holder (1; 110; 210) according to any one of claims 1 to 3, **characterised in that** the filter (130; 230) is arranged in the adjustment screw (40; 140; 240), in the connection hole (4) or in the pipe element (50; 150; 250).

5. Tool holder (1; 110; 210) according to any one of claims 1 to 4, **characterised in that** the filter (30) is constructed in the manner of a piston and is received via the outer peripheral face (31) thereof so as to be axially guided in the central cooling lubricant channel (10).

6. Tool holder (1; 110; 210) according to claim 5, **characterised in that** the filter (30) is arranged in the central cooling lubricant channel (10) with a defined press-fit arrangement.

7. Tool holder (1; 110; 210) according to any one of claims 1 to 6, **characterised in that** the filter (30) is constructed as a sieve.

## Revendications

1. Porte-outil (1 ; 110 ; 210) comprenant un système d'alimentation en réfrigérant-lubrifiant servant à acheminer un réfrigérant-lubrifiant provenant d'un point d'introduction côté broche d'une machine-outil, à travers un canal pour réfrigérant-lubrifiant (10 ; 110 ; 210) central, en direction d'un outil (60) maintenu dans le porte-outil (1 ; 101 ; 201), sachant que le canal pour réfrigérant-lubrifiant (10 ; 110 ; 210) central mène au moins à travers une douille (20 ; 120 ; 220) disposée dans le porte-outil (1 ; 101 ; 201) servant à prendre en charge le réfrigérant-lubrifiant amené côté broche et qu'un filtre (30 ; 130 ; 230) servant à filtrer des impuretés contenues dans le réfrigérant-lubrifiant est disposé dans le canal pour réfrigérant-lubrifiant (10 ; 110 ; 210) central, dans la direction d'écoulement du réfrigérant-lubrifiant, à une distance définie derrière l'orifice d'entrée du canal pour réfrigérant-lubrifiant (10 ; 110 ; 210) central de telle manière qu'un espace de stockage (11 ; 111 ; 211) servant à recevoir des impuretés retenues par le filtre (30 ; 130 ; 230) est créé dans le canal pour réfrigérant-lubrifiant (10 ; 110 ; 210) central, **caractérisé en ce**
**que** le filtre (30 ; 130 ; 230) est disposé, dans la direction d'écoulement du réfrigérant-lubrifiant, soit dans une zone centrale (21a) soit à proximité de l'orifice de sortie (21b) de la douille (20) soit dans une section, disposée en aval de la douille (120 ; 220), du canal pour réfrigérant-lubrifiant (10 ; 110 ; 210) central.

2. Porte-outil (1 ; 110 ; 210) selon la revendication 1, **caractérisé en ce que** le canal pour réfrigérant-lubrifiant (10; 110 ; 210) central mène à travers une vis de réglage (40 ; 140 ; 240) disposée en aval de la douille (20 ; 120 ; 220), vissée dans le porte-outil (1 ; 101 ; 201) ainsi qu'à travers une zone située entre la douille (20 ; 120 ; 220) et la vis de réglage (40 ; 140 ; 240).

3. Porte-outil (1 ; 110 ; 210) selon la revendication 2, **caractérisé en ce que** la zone située entre la douille (20 ; 120 ; 220) et la vis de réglage (40 ; 140 ; 240) comprend un alésage de liaison (4) réalisé dans le corps de base (2 ; 102 ; 202) du porte-outil (1 ; 101 ; 201) et/ou un élément tubulaire (50 ; 150 ; 250) disposé entre la vis de réglage (40 ; 140 ; 240) et la douille (20 ; 120 ; 220).

4. Porte-outil (1 ; 110 ; 210) selon l'une quelconque des revendications 1 à 3, **caractérisé en ce que** le filtre (130 ; 230) est disposé dans la vis de réglage (40 ; 140 ; 240), dans l'alésage de liaison (4) ou dans l'élément tubulaire (50 ; 150 ; 250).

5. Porte-outil (1 ; 110 ; 210) selon l'une quelconque des revendications 1 à 4, **caractérisé en ce que** le filtre (30) est réalisé à la manière d'un piston et est logé, par un guidage axial, par sa surface extérieure périphérique (31), dans le canal pour réfrigérant-lubrifiant (10) central.

6. Porte-outil (1 ; 110 ; 210) selon la revendication 5, **caractérisé en ce que** le filtre (30) est disposé dans le canal pour réfrigérant-lubrifiant (10) central présentant un ajustement serré défini.

7. Porte-outil (1 ; 110 ; 210) selon l'une quelconque des revendications 1 à 6, **caractérisé en ce que** le filtre (30) est réalisé sous la forme d'un tamis.
